# EUROPÄISCHE PATENTSCHRIFT

(11) **EP 1 657 467 B1**
(45) Veröffentlichungstag und Bekanntmachung des Hinweises auf die Patenterteilung: **06.04.2011**
(21) Anmeldenummer: 05023921.9
(22) Anmeldetag: 03.11.2005
(51) Int. Cl.: F16F 9/04

(54) **Verfahren zur Montage einer Luftfeder**
Method of assembling an air spring
Procédé d'assemblage d'un ressort pneumatique

(30) Priorität: 10.11.2004 DE 102004054205
(43) Veröffentlichungstag der Anmeldung: 17.05.2006
(73) Patentinhaber: ZF Friedrichshafen AG, 88046 Friedrichshafen (DE)
(72) Erfinder: Memmel, Alfred, 97453 Schonungen (DE); Markert-Hess, Christine, 97502 Euerbach (DE); Nowotka, Thomas, 97500 Ebelsbach (DE); Planitzer, Matthias, 97520 Röthlein (DE); Drescher, Horst, 97440 Werneck (DE)

(56) Entgegenhaltungen:
- EP-A- 0 151 696
- EP-A- 0 306 732
- EP-A- 0 319 448
- EP-A- 0 548 581
- EP-A- 0 939 241
- DE-A1- 4 118 576
- DE-A1- 10 149 697

## Beschreibung

Die Erfindung betrifft ein Verfahren zur Montage einer Luftfeder gemäß dem Oberbegriff von Patentanspruch 1.

Ein wesentliches Konstruktionsmerkmal bei einer Luftfeder besteht in der Klemmverbindung des Rollbalgs zum Deckel oder Boden. Eine Möglichkeit besteht darin, dass der Rollbalg mit einem Armierungsring versehen ist, der eine radiale Spannung zum Deckel oder Boden aufbaut. Diese Ausgestaltung des Rollbalgs ist sehr teuer, da der Armierungsring bei der Herstellung des Rollbalgs ummantelt werden muss.

Vielfach wird ein schlauchförmiger Rollbalg mittels Klemmringe am Boden oder Deckel befestigt. Bei einer druckbeaufschlagten Luftfeder weitet sich der Rollbalg auf, so dass der Rollbalg u. U. von dem Deckel oder Boden abgezogen wird. Dann liegt ein Totalausfall der Luftfeder vor.

Um diese Situation zu vermeiden, sind verschiedene Klemmringformen und Klemmflächengeometrien am Boden oder Deckel bekannt.

So kommt in der DE 41 18 576 A1 ein Klemmring mit konischer Klemmfläche zur Anwendung. In der DE 101 49 697 A1 werden ebenfalls verschiedene Klemmring- und Klemmflächenformen beschrieben, die jedoch vergleichsweise teuer sind und eine aufwändige Montage benötigen, damit die Klemmflächen wirksam werden können.

Die EP 0 548 581 A1 betrifft eine Luftfeder, die in einem Anschlussteil eine umlaufende Nut aufweist, deren Höhe kleiner ist als die Bauhöhe eines den Rollbalg am Anschlussteil fixierenden Klemmrings. Eine derartige Nut ist umformtechnisch vergleichsweise aufwändig. Des Weiteren liegt nur ein sehr kleiner Klemmbereich zwischen dem Anschlussteil und dem Rollbalg vor.

In der EP 0 939 241 A1 wird ein Anschlussteil verwendet, das eine Hohlkehle mit einer Mehrzahl von umlaufenden Nuten aufweist, die wiederum umlaufende Stege trennen. In dieses spezielle Profil wird der Rollbalg von einem Klemmring gespannt. Die Klemmfläche für den Rollbalg beschränkt sich auf das Profil innerhalb der Hohlkehle. In diesem Zusammenhang ist noch die EP 0 306 732 A2 zu nennen.

Die EP 0 319 448 A2 beschreibt eine Luftfeder mit einem Abrollrohr. Ein Klemmring verspannt ein Ende eines Rollbalgs radial auf einen Klemmbereich, der mit Ringnuten zur Steigerung der Klemmwirkung ausgeführt ist.

Aufgabe der vorliegenden Erfindung ist es, eine Verbindung zwischen einem Rollbalg und einem Anschlussteil wie einem Deckel oder einem Boden zu realisieren, die sehr betriebssicher und trotzdem einfach in der Montage ist.

Erfindungsgemäß wird die Aufgabe durch die Merkmale des Hauptanspruchs gelöst.

Das Anbauteil benötigt nur eine sehr einfache Profilierung, die sich auch bei Bauteilen, die nach einem Spritzgießverfahren hergestellt werden, leicht ausführen lassen. Die weitere axial verlaufende Spannfläche bildet mit dem Rollbalg eine weitere Dichtung, die insbesondere bei einer drucklosen Luftfeder an Bedeutung gewinnt. Bei der Montage müssen keine Verformungskräfte auf den Klemmring ausgenutzt werden. Folglich kann ein sehr einfacher Werkstoff für den Klemmring eingesetzt werden.

Der Rollbalg weist eine Schließfalte auf, die den Klemmring ausgehend von der radialen Spannfläche einhüllt. Damit wird eine vom Druck innerhalb der Luftfeder abhängige Vorspannung auf den Klemmring erreicht. Des weiteren kann der Klemmring bei einer Hubbewegung nicht von der radial verlaufenden Spannfläche gedrückt werden.

Die axial verlaufende Fläche weist an dem der radial verlaufenden Spannfläche gegenüberliegenden Ende eine Anschlagfläche für eine Stirnfläche des Rollbalgs auf. Diese Anschlagfläche vereinfacht die Montage des Rollbalgs, da dieser einfach bis zur Anlage an der Anschlagfläche auf das Anschlussteil geschoben wird.

Ein weiteres kostensenkendes Merkmal ist darin zu sehen, dass der Klemmring von einem Runddrahtring gebildet wird. Dabei ist der Runddrahtring als ein Endlosring ausgeführt, so dass keine Enden vorliegen, die sich in den Rollbalg eindrücken könnten oder zu einer ungleichen Vorspannung führen würden.

Zusätzlich kann die weitere axial verlaufende Spannfläche mit einer Ringnut ausgeführt sein. Insbesondere dann, wenn die Schließfalte den Klemmring nicht vollständig einhüllt, kann unter bestimmten Druckbedingungen nicht ausgeschlossen werden, dass Undichtigkeiten auftreten oder der Rollbalg in Längsrichtung der Luftfeder eine Relativbewegung zu den axial und radial verlaufenden Flächen ausführt.

Die Ringnut wird von der radial verlaufenden Spannfläche und einem umlaufenden Steg begrenzt. Damit der Klemmring problemlos montiert werden kann, weist der umlaufende Steg einen kleineren Durchmesser auf. als der Außendurchmesser der axial verlaufenden Spannfläche.

Anhand der folgenden Figurenbeschreibung soll die Erfindung näher erläutert werden.

Es zeigt:
- Fig. 1.: Prinzipdarstellung der Luftfeder
- Fig. 2a - 2e: Montageablauf des Rollbalgs an einem Abrollrohr
- Fig. 3: Deckel der Luftfeder mit Rollbalg
- Fig. 4: Montageablauf des Rollbalgs an dem Deckel nach Fig. 3

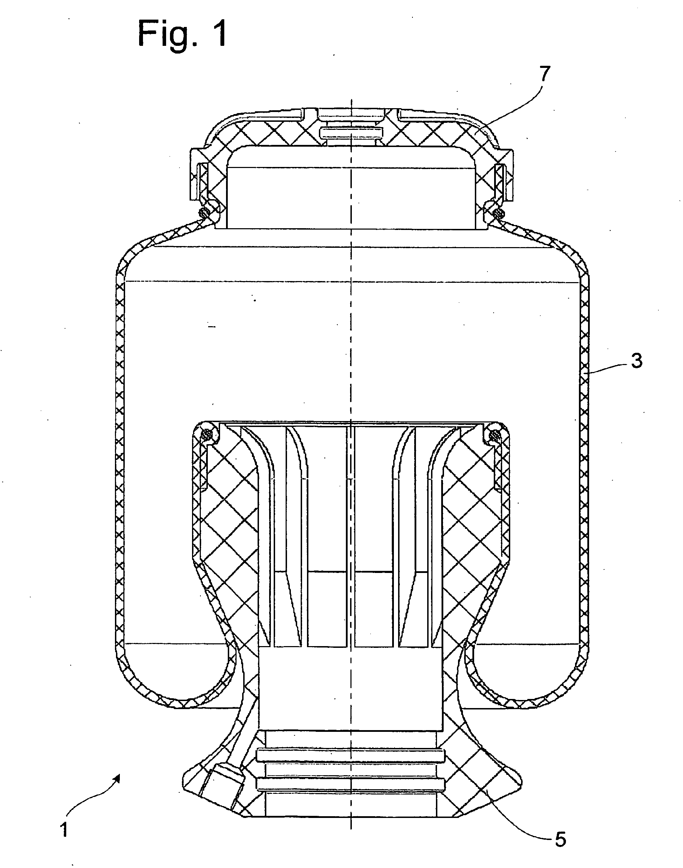

Die Figur 1 zeigt eine Luftfeder 1, die einen Rollbalg 3 aufweist, der mit seinem unteren Ende an einem Abrollrohr 5 und mit seinem oberen Ende an einer Kappe 7 als Anschlussteile verbunden ist. Diese Baueinheit kann beispielsweise mit einem Schwingungsdämpfer kombiniert werden, der das Abrollrohr trägt.

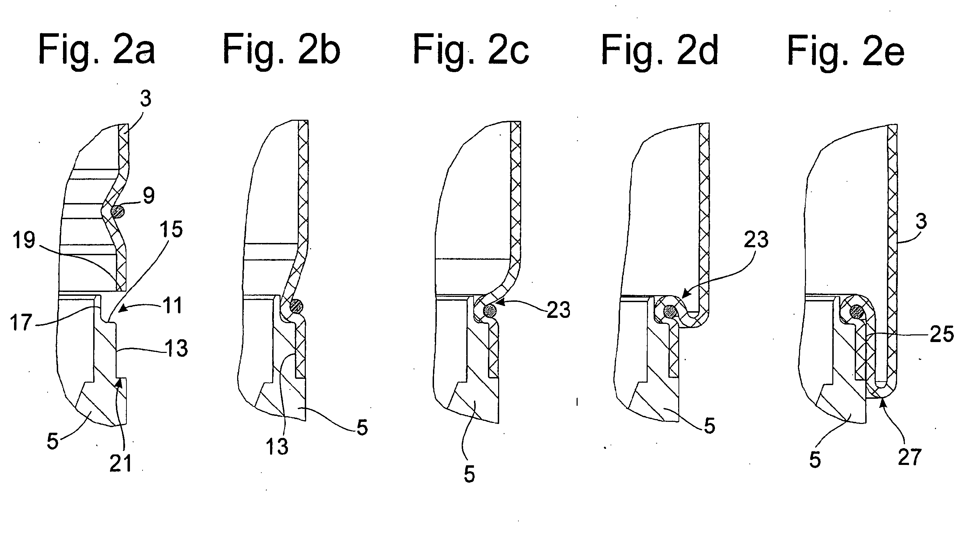

Mit den Figuren 2a bis 2e soll der Montageablauf des Rollbalgs auf das Abrollrohr 5 verdeutlicht werden. Der Rollbalg 3 wird von einem Rohrkörper als Halbzeug mit konstantem Querschnitt gebildet, der von einem Strang auf die vorgesehene Länge geschnitten wird. Auf den Rollbalg wird ein Klemmring 9 geschoben, dessen Innendurchmesser kleiner ist als der Außennenndurchmesser des Rollbalgs, wodurch sich der Rollbalg leicht einschnürt. Der Klemmring ist als endloser Runddrahtring ausgeführt.

Das Abrollrohr verfügt über eine Profilierung in der Form eines Absatzes 11, an dessen axialer Fläche 13 (s. auch Fig. 1) der Rollbalg anliegen soll. Der axialen Fläche 13 schließt sich eine radiale Spannfläche 15 an, die wiederum an einer weiteren axial verlaufenden Spannfläche 17 endet.

In einem weiteren Arbeitsschritt wird der Rollbalg auf das Abrollrohr geschoben, wobei seine Innenwandung auf der axialen Fläche 13 gleitet, bis eine Stirnfläche 19 an einer Anschlagfläche 21 anliegt, die der radial verlaufenden Spannfläche 15 bezogen auf die axial verlaufende Fläche 13 gegenüberliegt. Der Klemmring 9 spannt den Rollbalg auf die Übergangskontur von der axialen Fläche 13 zur radialen Spannfläche 15 vor.

Mit Hilfe einer nicht dargestellten Vorrichtung, die an dem anderen Ende des Rollbalgs angeschlossen ist, wird der Rollbalg 3 mit Druckmedium gefüllt. Dabei bildet sich eine Schließfalte 23 aus, die den Klemmring in Richtung der radialen Spannfläche 15 vorspannt und somit den Rollbalg axial klemmt. Anschließend wird der Rollbalg gemäß Fig. 2d axial gestaucht, wobei die Schließfalte 23 den Klemmring 9 vollständig einhüllt. In der Fig. 2e nimmt die Luftfeder die vorgesehen Arbeitslage ein. Der Rollbalg liegt mit seinem Außenflächenbereich 25 zwischen der Schließfalte 23 und einer Umkehrfalte 27 auf dem Ende des Rollbalgs auf, wobei der Druck innerhalb der Luftfeder über den Außenflächenbereich 25 auf das Ende des Rollbalgs innerhalb der axialen Fläche 13 wirkt, so dass insgesamt eine druckabhängige Vorspannung auf den Absatz 11 vorliegt.

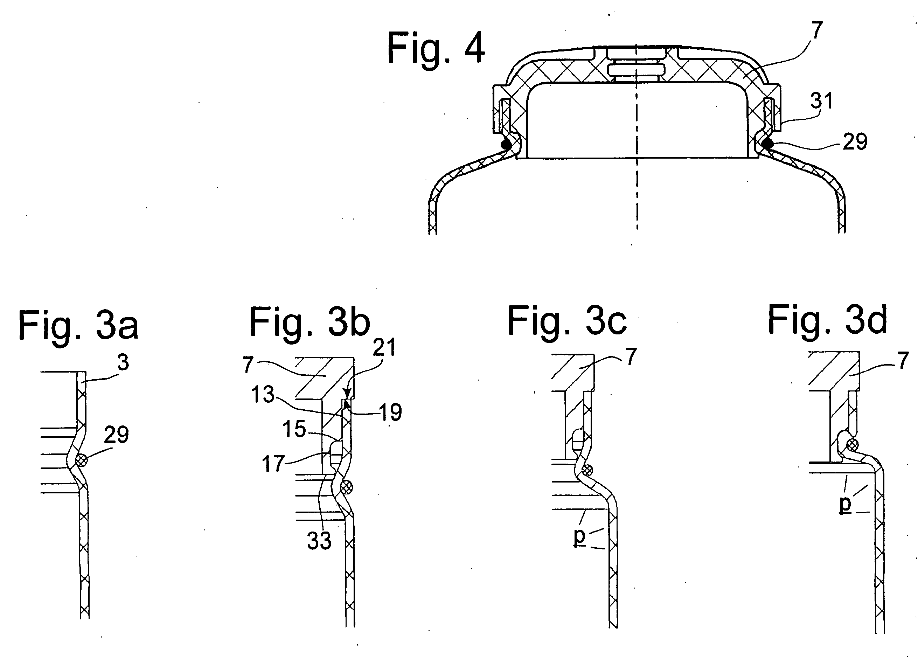

Die Figuren 3a bis 3d sollen die Montage des Rollbalgs 3 an der Kappe 7 (s. auch Fig. 4) verdeutlichen. Am oberen Ende des Rollbalgs 3 wird ein entsprechend dem Klemmring 9 funktional identischer Klemmring 29 aufgefädelt, der ebenfalls einen kleineren Innendurchmesser aufweist als der Nennaußendurchmesser des Rollbalgs. Der Rollbalg wird auf die axiale Fläche 13 geschoben, bis die Stirnfläche 19 an der Anschlagfläche 21 der Kappe 7 anliegt. Das Rollbalgende kann sich geringfügig aufweiten, doch wirkt ein umlaufendes Ringsegment 31 (Fig. 4) begrenzend. Mit dem Ringsegment wird die obere Stirnfläche des Rollbalgs abgedeckt, so dass kein Schmutz in diesen Bereich eindringen kann. In der Fig. 3 wird der Rollbalg mit Druckmedium p gefüllt, wodurch sich der Rollbalg 3 radial aufweitet und den Klemmring 29 axial in Richtung der Kappe verschiebt. Die Kappe verfügt nach dem Prinzip wie beim Abrollrohr über eine radiale Spannfläche 15 und eine weitere axial verlaufende Fläche 17 (Fig. 3b), die mit einer Ringnut ausgeführt ist, die von der radial verlaufenden Spannfläche 15 und einem umlaufenden Steg 33 begrenzt wird. Der umlaufende Steg 33 weist einen kleineren Durchmesser auf als der Außendurchmesser der axial verlaufenden Spannfläche 17 und soll vor allem bei sehr niedrigen Betriebsdrücken innerhalb der Luftfeder Dichtheit gewährleisten. Weiterhin wird ein Abziehen des Rollbalgs bei maximalen Belastungen im drucklosen Zustand verhindert. Insgesamt liegt ein sehr einfacher Montageablauf vor, bei dem der Klemmring nicht radial vorgespannt werden muss, sondern ein starrer Klemmring verwendet werden kann, der unter Ausnutzung des Betriebsdrucks in der Luftfeder montiert und im montierten Zustand in seiner vorbestimmten Lage gehalten wird.

## Patentansprüche

1. Verfahren zur Montage einer Luftfeder (1), umfassend einen Rollbalg (3), der endseitig an einem Anschlussteil befestigt wird, wobei das Anschlussteil (5; 7) eine Profilierung aufweist, die zusammen mit einem Klemmring den (9; 29) Rollbalg (3) fixiert,
**dadurch gekennzeichnet,**
**dass** die Profilierung von einem Absatz (11) gebildet wird, an dessen axial verlaufender Fläche (13) der Rollbalg (3) anliegt, wobei der Rollbalg (3) von dem Klemmring (9; 29) und vom Betriebsdruck innerhalb der Luftfeder axial über eine Übergangskontur von der axialen Flächen (13) auf eine radiale Spannfläche (15) verformt wird, der sich eine weitere axial verlaufende Spannfläche (17) anschließt, wobei der Klemmring (9; 29) im unmontierten, drucklosen Zustand der Luftfeder (1) einen kleineren Innendurchmesser aufweist als der Rollbalgaußennenndurchmesser.

2. Verfahren zur Montage einer Luftfeder nach Anspruch 1,
**dadurch gekennzeichnet,**
**dass** der Rollbalg (3) eine Schließfalte (23) aufweist, die den Klemmring (9; 29) ausgehend von der radialen Spannfläche (15) einhüllt.

3. Verfahren zur Montage einer Luftfeder nach Anspruch 1,
**dadurch gekennzeichnet,**
**dass** die axial verlaufende Fläche (13) an dem der radial verlaufenden Spannfläche (15) gegenüberliegenden Ende eine Anschlagfläche (21) für eine Stirnfläche (19) des Rollbalgs (3) aufweist.

4. Verfahren zur Montage einer Luftfeder nach Anspruch 1,
**dadurch gekennzeichnet,**
**dass** der Klemmring (9; 29) von einem Runddrahtring gebildet wird.

5. Verfahren zur Montage einer Luftfeder nach Anspruch 4,
**dadurch gekennzeichnet,**
**dass** der Runddrahtring (9; 29) als ein Endlosring ausgeführt ist.

6. Verfahren zur Montage einer Luftfeder nach Anspruch 1,
**dadurch gekennzeichnet,**
**dass** die weitere axial verlaufende Spannfläche (17) mit einer Ringnut (15; 17; 33) ausgeführt ist.

7. Verfahren zur Montage einer Luftfeder nach Anspruch 6,
**dadurch gekennzeichnet,**
**dass** die Ringnut von der radial verlaufenden Spannfläche (15) und einem umlaufenden Steg (33) begrenzt wird.

8. Verfahren zur Montage einer Luftfeder nach Anspruch 7,
**dadurch gekennzeichnet,**
**dass** der umlaufende Steg (33) einen kleineren Durchmesser aufweist als der Außendurchmesser der axial verlaufenden Spannfläche (17).

## Claims

1. Method for assembling an air spring (1), comprising a rolling bellows (3) which is fastened at the end side to a connecting part, the connecting part (5; 7) having a profiling which, together with a clamping ring (9; 29), fixes the rolling bellows (3), **characterized in that** the profiling is formed by a shoulder (11), against the axially extending face (13) of which the rolling bellows (3) bears, the rolling bellows (3) being deformed axially by the clamping ring (9; 29) and by the operating pressure within the air spring via a transition contour from the axial faces (13) onto a radial clamping face (15) which is adjoined by a further axially extending clamping face (17), the clamping ring (9; 29) having a smaller internal diameter than the rolling-bellows nominal external diameter in the non-assembled, pressureless state of the air spring (1).

2. Method for assembling an air spring according to Claim 1, **characterized in that** the rolling bellows (3) has a closing fold (23) which encloses the clamping ring (9; 29) starting from the radial clamping face (15).

3. Method for assembling an air spring according to Claim 1, **characterized in that**, at the end which lies opposite the radially extending clamping face (15), the axially extending face (13) has a stop face (21) for an end face (19) of the rolling bellows (3).

4. Method for assembling an air spring according to Claim 1, **characterized in that** the clamping ring (9; 29) is formed by a round wire ring.

5. Method for assembling an air spring according to Claim 4, **characterized in that** the round wire ring (9; 29) is configured as an endless ring.

6. Method for assembling an air spring according to Claim 1, **characterized in that** the further axially extending clamping face (17) is configured with an annular groove (15; 17; 33).

7. Method for assembling an air spring according to Claim 6, **characterized in that** the annular groove is delimited by the radially extending clamping face (15) and a circumferential land (33).

8. Method for assembling an air spring according to Claim 7, **characterized in that** the circumferential land (33) has a smaller diameter than the external diameter of the axially extending clamping face (17).

## Revendications

1. Procédé de montage d'un ressort pneumatique (1), comprenant un soufflet roulant (3), qui est fixé à son extrémité à une partie de raccordement, la partie de raccordement (5 ; 7) présentant un profilage qui fixe le soufflet roulant (3) conjointement avec une bague de serrage (9 ; 29),
**caractérisé en ce que**
le profilage est formé par un épaulement (11) sur la surface s'étendant axialement (13) duquel s'applique le soufflet roulant (3), le soufflet roulant (3) étant déformé par la bague de serrage (9 ; 29) et par la pression de fonctionnement à l'intérieur du ressort pneumatique axialement par le biais d'un contour de transition de la surface axiale (13) à une surface de serrage radiale (15), à laquelle se raccorde une autre surface de serrage s'étendant axialement (17), la bague de serrage (9 ; 29), dans l'état non monté, sans pression, du ressort pneumatique (1), présentant un plus petit diamètre intérieur que le diamètre nominal extérieur du soufflet roulant.

2. Procédé de montage d'un ressort pneumatique selon la revendication 1,
**caractérisé en ce que**
le soufflet roulant (3) présente un pli de fermeture (23) qui enveloppe la bague de serrage (9 ; 29) à partir de la surface de serrage radiale (15).

3. Procédé de montage d'un ressort pneumatique selon la revendication 1,
**caractérisé en ce que**
la surface s'étendant axialement (13) présente, sur l'extrémité opposée à la surface de serrage s'étendant radialement (15), une surface de butée (21) pour une face frontale (19) du soufflet roulant (3).

4. Procédé de montage d'un ressort pneumatique selon la revendication 1,
**caractérisé en ce que**
la bague de serrage (9 ; 29) est formée par une bague en fil métallique rond.

5. Procédé de montage d'un ressort pneumatique selon la revendication 4,
**caractérisé en ce que**
la bague en fil métallique rond (9 ; 29) est réalisée sous forme de bague sans fin.

6. Procédé de montage d'un ressort pneumatique selon la revendication 1,
**caractérisé en ce que**
la surface de serrage s'étendant axialement supplémentaire (17) est réalisée avec une rainure annulaire (15 ; 17 ; 33).

7. Procédé de montage d'un ressort pneumatique selon la revendication 6,
**caractérisé en ce que**
la rainure annulaire est limitée par la surface de serrage s'étendant radialement (15) et une nervure périphérique (33).

8. Procédé de montage d'un ressort pneumatique selon la revendication 7,
**caractérisé en ce que**
la nervure périphérique (33) présente un plus petit diamètre que le diamètre extérieur de la surface de serrage s'étendant axialement (17).
